# EUROPEAN PATENT SPECIFICATION

(11) **EP 3 403 810 B1**
(45) Date of publication and mention of the grant of the patent: **11.11.2020**
(21) Application number: 18161949.5
(22) Date of filing: 15.03.2018
(51) Int. Cl.: B29C 65/20, E06B 3/96

(54) **METHOD AND DEVICE FOR WELDING AT LEAST TWO PROFILES**
VERFAHREN UND VORRICHTUNG ZUM SCHWEISSEN MINDESTENS ZWEIER PROFILELEMENTE
PROCÉDÉ ET DISPOSITIF PERMETTANT DE SOUDER AU MOINS DEUX ÉLÉMENTS PROFILÉS

(30) Priority: 18.05.2017 EP 17171695
(43) Date of publication of application: 21.11.2018
(73) Proprietor: Soenen, Hendrik, 8870 Izegem (BE); Soenen, Eveline, 8870 Izegem (BE)
(72) Inventor: Soenen, Hendrik, 8870 Izegem (BE); Soenen, Eveline, 8870 Izegem (BE)
(74) Representative: Prinz & Partner mbB

(56) References cited:
- WO-A1-2016/177715
- JP-A- 2013 151 816
- US-A- 4 239 574
- US-A1- 2008 223 526

## Description

The invention relates to a method for welding at least two profiles to form a frame portion as well as a device for welding at least two profiles to form a frame portion.

In the state of the art, profiles, mainly used as window and door frames, are welded together by melting the face sides of the profiles that are coupled each other to form the frame portion. Typically, the heating is performed by a heating unit comprising a heat plate that is positioned between both face sides of the profiles such that the profiles are pressed against the heated heating plate for melting the face sides appropriately. For instance, the face sides of the profiles are cut at 45° to define a right-angled portion of a respective window or door frame.

The device for welding typically comprises at least two movable retainers that are configured to engage the profiles to be welded wherein the retainers can be moved into a welding position wherein the profiles contact the heating plate via the face sides. Furthermore, the heating unit itself is also movable such that it can be moved between a passive position and an active position in which the heating plate contacts the face sides of the profiles while melting the face sides appropriately.

Such a method and device for welding is disclosed in WO 2013/132406 A1, for instance.

As described in the international application, it is so far necessary to pre-machine the profiles, in particular their welding surfaces, in order to avoid the occurrence of a visible welding bead being undesired. Usually, the welding bead would occur due to the melted material being pressed to the outer surfaces when the profiles are pressed against each other in order to form the frame portion.

So far, the extra machining step is performed in order to form a gap or recess for receiving the melting material. Thus, the occurrence of a visible welding bead can be avoided. However, this results in a method for welding at least two profiles being more time consuming such that the costs for providing a frame portion also increase due to the additional pre-machining step being required. In addition, the welded frame portion is weaker with regard to the so-called corner-strength due to the material removed previously. Further, the pre-machining may evoke chips being unwanted as they might impair the quality of the welding.

In US 4 239 574, a process and apparatus for welding resin structures such as frame profiles are disclosed. A scraper may be moved along the welding surfaces after the respective profiles are coupled with each other.

WO 2016/177715 A1 describes a method and device for connecting profile parts wherein the profiles are heated at their end faces and coupled with each other via their heated end faces.

In US 2008/0223526 A1, a fusion welding device is shown wherein frame members of resin are coupled with each other via their end faces that have been heated previously.

JP 2013-151816 A shows an apparatus and a method of coupling frame members that are pressed against a heating surface so as to melt their end faces. While doing so, a pressure member with scraping function is moved along the upper surfaces of the frame members toward the heating surface.

Therefore, it is an object of the invention to provide a method and a device for welding at least two profiles being more efficient while ensuring a welding of at least two profiles without the occurrence of a visible welding bead without weakening the welding.

The invention provides a method for welding at least two profiles to form a frame portion, with the following steps:
- Providing two profiles to be welded via welding surfaces;
- Heating the welding surfaces of the profiles via a heating unit having at least one heating surface that faces at least one welding surface of the profiles;
- Moving a cutting unit along at least one welding surface to remove melted material, wherein the cutting unit is moved along at least one edge of the welding surface to remove melted material at the edge region of the at least one welding surface, and wherein the cutting unit is moved along the at least one welding surface before the profiles are coupled via their heated welding surfaces; and
- Coupling the profiles via their heated welding surfaces to form the frame portion.

The invention is based on the finding that a visible welding bead can be avoided in an efficient manner by removing excessive melted material.

Therefore, a pre-machining of the profiles is no longer required in order to avoid a visible welding bead on one of the outer surfaces of the resulting frame portion. Accordingly, the frame portion can be fabricated in an efficient manner. The melted material is guided to the inside of the welding surfaces such that no visible welding bead occurs on the outer surfaces. Alternatively, the excessive material is removed by the cutting unit. This ensures that the heat input of the heating surface is substantially the same as in the prior art. As no material is removed previously (by a pre-machining), maximum material is left to be welded together ensuring high stability of the welding.

A welding bead usually arises at the edges of the respective welding surfaces when the heated profiles are coupled via their heated welding surfaces as the melted material is pressed towards the outer surfaces via the respective edges. Thus, the occurrence of a welding bead can be avoided as melted material is removed in the edge areas.

Hence, the cutting unit is moved after the respective welding surfaces were heated, but prior to their coupling. Hence, melted material provided at the face sides or rather the welding surfaces is removed. For this purpose, the cutting unit may at least partly contact the respective face side.

An aspect provides that a relative movement is effected between the at least one heating surface and at least one welding surface in a welding plane being substantially parallel to the at least one welding surface while the at least one heating surface facing the welding surface. Hence, a visible welding bead can be avoided in an efficient manner due to the relative movement between the at least one heating surface and the corresponding welding surface during the welding cycle. This means that the heating surface contacting the welding surface of at least one profile may be moved with respect to the welding surface. Thus, a relative motion between the part of the heating unit providing the heating surface and at least one profile is effected.

The movement of the cutting unit along the at least one welding surface ensures that any upcoming melted material is removed. Hence, a welding bead can be prevented.

Furthermore, it is ensured that the whole welding surface of the corresponding profile is heated, in particular melted, while being in contact with the heating surface. The at least one heating surface may be covered with a Polytetrafluoroethylene (PTFE), also known as Teflon. For instance, the heating surface is coated with a layer established by such a material. Alternatively, the heating surface is covered with a PTFE material, for instance a sheet. During the coupling step, the respective welding surfaces previously heated are cooled down in order to provide a firmly bonded connection.

Particularly, the heating unit comprises one heating surface per welding surface. Thus, each welding surface is heated by a corresponding heating surface. For instance, two heating surfaces are provided for heating the welding surfaces of two profiles that form the frame portion.

According to an aspect, at least one of the profiles is made of at least one of a plastic material at least partly, in particular polyvinyl chloride (PVC), wood, glass fiber, and a metal, in particular aluminum. Thus, the method for welding can be applied to different materials. Furthermore, different profiles can be combined, for instance plastic material and wood such that an efficient method for combining, in particular welding, different profiles is ensured. Accordingly, at least a part or a portion of the respective profile is made of a plastic material.

According to another aspect, each of the profiles has a base portion and a welding portion that comprises the welding surface at its face side. Hence, the profiles have a substantially elongated shape wherein the welding surface is provided at one of its face sides. This means that the profiles are brought in contact via their end faces appropriately.

In particular, the welding surface is inclined to the main direction of the base portion, for instance by an angle of 45°. Typically, a frame, for instance a door or window frame, is established by four profiles that are coupled to each other in order to define four right angles. Thus, two profiles forming a right-angled frame portion each have a welding surface being inclined by 45° with respect to the main direction of the profile, in particular its base portion. However, other angles are also applicable, for instance 60° and 30°. Moreover, two profiles do not have to establish a right angle as a window frame may be established by more than four profiles.

An aspect provides that the heating unit comprises at least one heating plate defining the heating surface, in particular wherein the heating plate defines two heating surfaces facing both welding surfaces during the heating step respectively. The heating unit may be part of a head. The heating plate may be configured as a resistive heating plate such that a current is provided in order to heat up the heating plate appropriately. Furthermore, the heating plate is thin such that the profiles do not have to be moved along a big distance to be coupled after being melted by the heating unit. This ensures that the welding surfaces do not cool down during this movement. The at least one heating plate melts both welding surfaces simultaneously in a substantially similar manner.

In general, the heating unit may comprise at least one heating member comprising the heating surface(s). The heating member can be a flat one such as the heating plate.

Further, the heating plate may be moving in the welding plane during the heating step. Besides the heating plate, the heating unit may comprise a driving unit that drives the heating plate appropriately in order to ensure the relative movement, in particular the movement of the heating plate with respect to the profiles heated.

Moreover, the heating surface may be established by different heating members that might be driven separately. Thus, the driving unit may drive several heating members (simultaneously) that together form the heating surface used for heating the corresponding welding surface.

Particularly, the heating plate moves in at least two different directions. Thus, the heating plate can be moved in all directions within the welding plane. These directions can be labeled as upwards, downwards, backwards and forwards while viewing on the thin face side of the heating plate, for instance. Accordingly, the heating plate may be moved during the welding cycle in all directions of the welding plane, for instance the y- and z-axes.

Another aspect provides that the heating plate is moving in a step-wise manner, in particular wherein the step size is between 5 mm and 40 mm. Accordingly, the driving unit may comprise at least one of a step motor, a servo motor, a servo gear or a step gear. Thus, a cost-efficient driving unit is established. During each step, the heating plate may be moved with a constant velocity ensuring a homogenous heating of the respective welding surface of the profile. Alternatively, the heating plate is moved with a varying velocity.

Particularly, the heating plate moves in a first direction in a first step and in a second direction in a second step wherein the second direction is perpendicular to the first direction, in particular wherein the steps are repeated. The movement of the heating plate corresponds to staircase-shaped movement within the welding plane. The movement can be defined by a step sequence comprising a downward-step, a backward-step, a downward-step, and so on. Alternatively, the step sequence may be different.

However, the heating plate may be moved in the welding plane in different ways. Therefore, different combinations of movement can be applied during the welding step.

According to a certain embodiment, the heating unit comprises at least two heating plates defining together one heating surface for the welding surfaces. Thus, two different heating plates are provided wherein each heating plate is used for heating the welding surfaces of the profiles. For instance, different temperature portions can be established by the different heating plates forming the heating surface contacting the respective welding surface during the welding cycle. Moreover, the two heating plates can be moved with respect to each other.

Both heating plates may be arranged in a common plane, in particular wherein both heating plates are moved independently of each other. Accordingly, the different heating members are formed by different plates that are aligned with each other such that the common plane is established. However, both heating plates can be moved with respect to each other. Thus, several movement combinations of the heating surface can be applied due to the heating plates forming the common heating surface.

According to an aspect, a pressure is applied to at least one interface defined by the heating unit and at least one welding surface via a pressure unit. The interface exposed to the pressure is provided by the contact portion of the heating plate and the corresponding profile, in particular its face side being in contact with the heating plate, wherein one profile has several interfaces with the heating plate depending on its cross section. Accordingly, the pressure unit may comprise different pressure members for each interface. The pressure unit ensures that no welding bead occurs on one of the outer surfaces of the frame portion formed. Accordingly, no visible welding bead occurs.

In general, the pressure members may be allocated to the upper and lower interfaces of each profile with the heating plate. In addition, further pressure members may be applied which are allocated to the opposite side faces of the respective profile. Hence, a profile having a square cross section would be surrounded by pressure members.

According to another aspect, at least one pressurizing member of the pressure unit is pressed against the heating unit during the welding cycle, in particular the heating plate, in particular wherein two pressurizing members are pressed against the heating unit during the welding cycle, the two pressurizing members are assigned to one profile. Therefore, a constant contact is established during the welding cycle. This contact corresponds to a sealing of the respective interface such that no material melted can flow along the interface due to the pressure applied by the respective pressurizing member(s). The at least two pressurizing members are assigned to the upper and lower interfaces of each profile with the heating plate. The at least one pressurizing member of the pressure unit may be constantly pressed against the heating unit during the welding cycle.

Generally, the pressurizing members may be assigned to the contour of the respective profile. This means that the pressurizing members may be situated at any portion of the contour of the respective profile in order to apply a certain pressure on the profile avoiding the occurrence of a welding beam.

Moreover, the pressure unit, in particular at least one pressurizing member of the pressure unit, may be constantly pressed against the profile during the welding cycle.

Accordingly, it can be prevented that melted material is pushed outwards during the coupling process of the profiles.

For instance, the pressure unit, in particular at least one respective pressurizing member, can be used as guiding member for the cutting unit. Thus, the pressure unit, in particular at least one respective pressurizing member, corresponds to a reference member that defines the movement of the cutting unit.

In addition, the cutting unit may be moved along more than one edge of the respective profile, for instance the whole contour.

According to an aspect, the pressure unit is moved along at least one welding surface before the profiles are coupled via their heated welding surfaces. Thus, the pressure unit may be moved in a similar manner as the cutting unit so that the melted material is pressed inwardly. Particularly, the pressure unit and the cutting unit may be moved simultaneously.

The cutting unit may be moved along at least one welding surface after the profiles are coupled via their heated welding surfaces. The movement of the cutting unit after the coupling can be done in addition to the movement of the cutting unit prior to the coupling. Hence, melted material is removed (located at the welding surface) as well as melted material being pressed outwardly during the contacting step is removed due to the movement of the cutting unit after the profiles were coupled. The melted material is pressed outwardly at the welding surface, in particular the respective edge. Hence, the movement of the cutting unit after the coupling also takes place along the welding surface, in particular in the plane defined by the welding surface. Thus, the cutting unit does not contact the respective face side of the profiles as the profiles are contact with each other via their face sides.

Further, the invention provides a device for welding at least two profiles to form a frame portion, comprising:
- at least two movable retainers to engage the profiles to be welded that each have a welding surface facing each other when engaged in the retainers,
- at least one heating unit that is configured to heat the welding surfaces of the profiles wherein the heating unit comprises at least one heating plate,
- at least one cutting unit that is configured to be moved along at least one edge of the welding surface to remove melted material at the edge region of the at least one welding surface before the profiles are coupled via their heated welding surfaces, and
- at least one driving unit connected to the heating unit and/or the movable retainers, wherein the driving unit is configured to effect a relative movement between the heating plate and the retainers.

According to an aspect, at least one pressure unit is provided that is configured to apply a pressure to at least one interface defined by the heating unit and at least one welding surface. Accordingly, the pressure unit applies a pressure on the respective interface and/or the cutting unit removes melted material. Accordingly, the occurrence of a welding bead at one or more of the several outer surfaces of the frame portion formed can be avoided.

The driving unit may be configured to effect a relative movement between the heating plate and the retainers while heating the welding surfaces. Hence, the retainers and the heating plate are moved with respect to each other (relative movement) during the welding cycle. For instance, the driving unit drives the heating plate wherein the retainers may remain stationary during the welding cycle being defined by heating the welding surfaces. Alternatively, the retainers are also moved during the welding cycle.

The pressure unit and/or the cutting unit may also be driven by the driving unit. Alternatively, another driving unit or any other suitable unit may be used for driving the pressure unit and/or the cutting unit.

Generally, the heating unit may be configured to be moved between an active position and a passive position wherein the heating plate is positioned between the welding surfaces of the profiles in the active position. This means that the heating plate can be moved (linearly) in one direction in order to be positioned such that the corresponding heating surface(s) face(s) the welding surfaces of the profiles. Alternatively, curvilinear or circular movement is enabled. Despite this movement, the heating plate may be further driven such that it can be moved during the welding cycle in a welding plane being parallel to the welding surface of at least one profile that is contacted by the heating plate during the welding cycle. Particularly, the welding plane is parallel to both welding surfaces. Accordingly, the driving unit is connected to the heating plate for moving the heating plate appropriately during the welding cycle. The same driving unit ensures the linear movement of the heating plate for moving from the passive position into the active one and vice versa. Generally, the heating plate may be moved by the driving unit in a different manner, in particular in a non-linear manner, for instance curvilinear.

The device may comprise a transmission unit. The transmission unit may transmit a (linear) movement generated by the driving unit into a movement being perpendicular to the direction of the movement generated by the driving unit. Thus, a single motor may be sufficient for establishing a movement in two different directions.

Alternatively, the driving unit has two or more different motors for initiating the appropriate movement.

The movable retainers may be configured to be moved linearly in order to be moved between a loading position, a heating position, and a coupling position. In the heating position, the profiles being engaged are brought into contact with the at least one heating plate whereas the face sides of the profiles, in particular their welding surfaces, are brought into contacted with each other in the coupling position of the retainers. The heating plate is moved (linearly) from its active position into the passive position in the meantime. Alternatively, the movable retainers may be configured to be moved in a curvilinear manner.

According to an aspect, the device comprises a pressure unit that is configured to apply a pressure to at least one interface defined by the heating unit and at least one welding surface. The interfaces are defined by the contact areas of the profiles, in particular the welding surfaces, and the heating plate(s). Therefore, each rectangular profile has four different interfaces with the corresponding heating surface used for heating the welding surface of the profile.

Another aspect provides that the pressure unit can comprise at least one pressurizing member that is forced against the heating plate via a force introduction member, in particular several pressurizing members. The force introduction member may be established by a spring, a cylinder or any other suitable means. The spring ensures that the pressurizing member is constantly pressed against the heating plate during the welding cycle. Further, the pressure applied can be set due to the spring force of the spring. The constant contact acts like a seal such that no material melted can escape as it is blocked by the pressurizing member.

According to an embodiment, the pressurizing member has a contacting surface that contacts an outer surface of the profile wherein the contacting surface corresponds to the shape of the respective profile. A homogenous contact along the outer surface of the profile is ensured. Hence, the pressurizing member seals the profile along its outer surface due to its continuous and close contact ensured by the corresponding shapes of the contacting surface and the outer surface of the profile.

The pressurizing members may be integrated in contourblocks. The contourblocks correspond to support blocks that are assigned to the retainers to support the respective profile when the respective profile is clamped, in particular by interacting with the contour of the profile. The contourblocks are used to support the respective profile and to maintain its shape when pressing the profile for fixation purposes in the retainer. Thus, a deformation of the profile due to clamping is avoided by the contourblocks.

The cutting unit may comprise at least one knife, in particular two knives, assigned to two edges of the welding surfaces of the profiles to be welded, in particular wherein the two knives are inclined with respect to each other. The knife, also called cutter, removes the melted material appropriately. As two profiles are to be connected via their respective welding surfaces, two knives (or rather cutters) per cutting unit may be provided ensuring that the melted material is removed at both profiles.

According to another aspect, two cutting units are provided that are assigned to two opposite sides of the movable retainers, in particular the upper side and the lower side or the front side and the back side. This ensures that the melted material can be removed on opposite sides of the profiles as the profiles are engaged in the movable retainers. Accordingly, all existing interfaces, which are prone to the occurrence of welding beads, can be assigned to the cutting units, in particular the respective knives.

Another aspect provides that the pressure unit and the cutting unit are separately formed, in particular wherein the at least one driving unit is configured to control the movement of the pressure unit and/or the cutting unit respectively. The pressure unit and the cutting unit are independent of each other. Hence, they can also be controlled independently of each other. For instance, the driving unit drives the pressure unit and the cutting unit independently of each other.

However, the movements of the pressure unit and the cutting unit may also be linked.

In fact, the movements of several or rather all components, for instance the cutting unit(s), the pressure unit(s), the retainer(s), may be linked as the components may be controlled according to a certain welding scenario.

The device may have at least one head that comprises two movable retainers, one heating unit and one cutting unit and optionally one pressure unit, in particular wherein the device has several heads each comprising two movable retainers, one heating unit and one cutting unit and optionally one pressure unit. One head is configured to weld a frame portion, typically a L-shape portion of the overall frame. Hence, the device may typically comprise four heads for the four corners of the frame.

Particularly, the device is configured to perform a method as described above. Therefore, the advantages mentioned above also apply to the device in a similar manner.

The invention will now be described with reference to a preferred embodiment of the invention that is shown in the enclosed drawings. In the drawings,
- Figure 1 schematically shows a device for welding at least two profiles according to a first embodiment of the invention,
- Figure 2 partly shows a device for welding at least two profiles according to a second embodiment of the invention in a loading position,
- Figure 3 partly shows the device of Figure 2 in a heating position,
- Figure 4 partly shows the device of Figure 2 in a coupling position,
- Figure 5 shows a schematic cross section of a pressure unit used in a device for welding at least two profiles according to the invention,
- Figure 6 shows another schematic cross section of the pressure unit shown in Figure 5,
- Figure 7 schematically shows a device for welding at least two profiles according to a third embodiment of the invention in a loading position,
- Figure 8 shows a schematic overview of a device for welding at least two profiles according to a fourth embodiment of the invention,
- Figure 9 shows a frame portion provided by a method according to the invention,
- Figure 10 shows a frame portion provided by a method according to the state of the art,
- Figure 11 shows a perspective view of a cutting unit according to an embodiment,
- Figure 12 shows another perspective view of the cutting unit shown in Figure 11,
- Figure 13 schematically shows a device for welding at least two profiles according to another embodiment of the invention, and
- Figure 14 schematically shows a sketch illustrating the guided cutting operation.

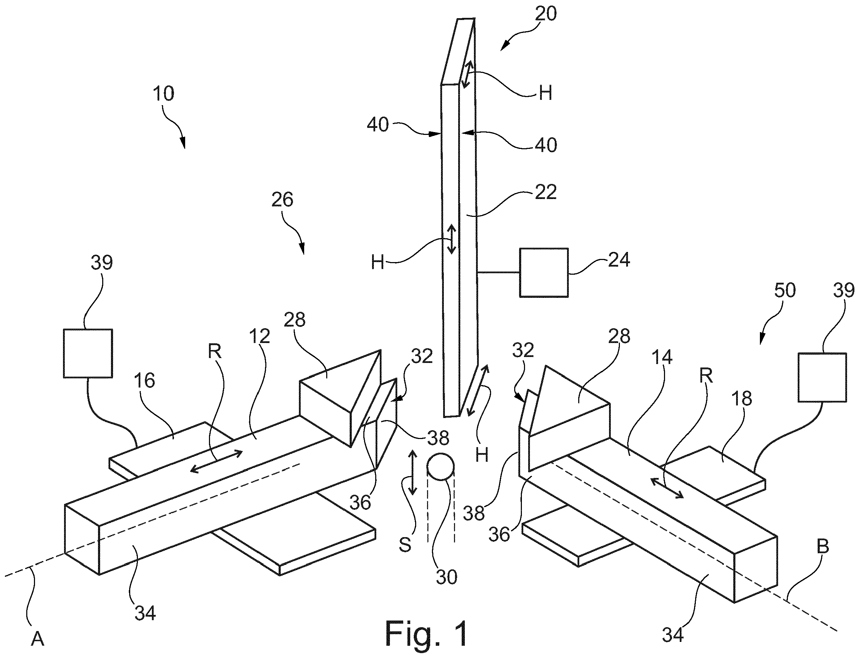

In Figures 1 to 4, a device 10 for welding at least two profiles 12, 14 is schematically shown according to a first embodiment and a second embodiment being quite similar.

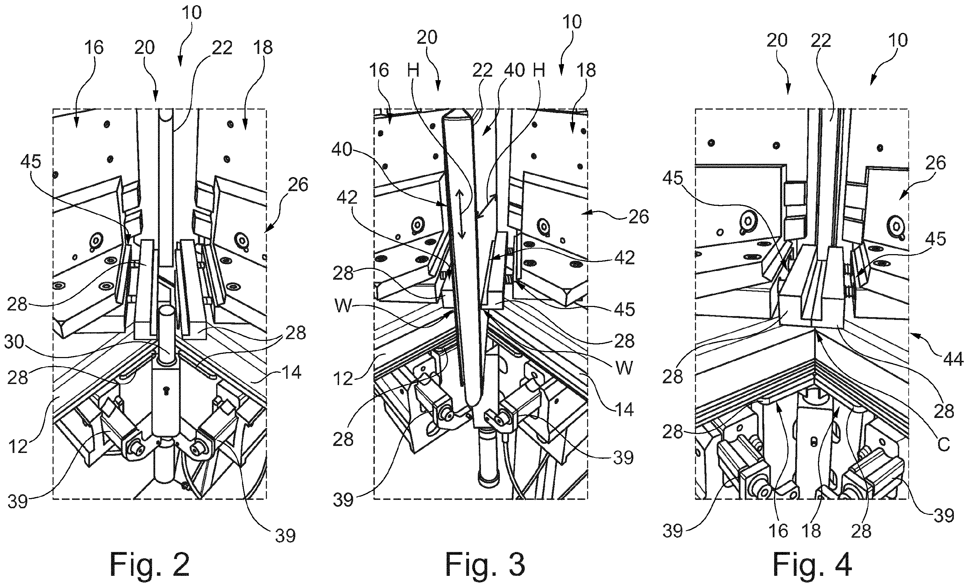

The device 10 comprises two movable retainers 16, 18 that are configured to engage the profiles 12, 14 to be welded. The retainers 16, 18 are linearly moveable between at least two different positions, in particular three different positions. These positions may be labelled as loading position (shown in Figures 1 and 2), a heating position (Figure 3), and a coupling position (Figure 4).

The device 10 has a heating unit 20 that comprises a single heating plate 22 as well as a schematically illustrated driving unit 24 that is connected to the heating plate 22 such that the heating plate 22 can be driven by the driving unit 24 appropriately. For instance, the driving unit 24 is configured to drive the heating plate 22 linearly such that it can be driven from a passive position (Figures 1 and 2) into an active position (Figure 3). This linear movement corresponds to a movement in forward direction. In addition, the driving unit 24 is also configured to drive the heating plate 22 backwards in order to relocate the heating plate 22 in the passive position (Figure 4). These movements are indicated by the arrows H in Figure 1.

In an alternative embodiment, the heating plate 22 may be moved in a curvilinear manner. This may be established by guiding members that guide the heating plate 22 appropriately during its movement.

In addition, the retainers 16, 18 can also be moved in a curvilinear manner.

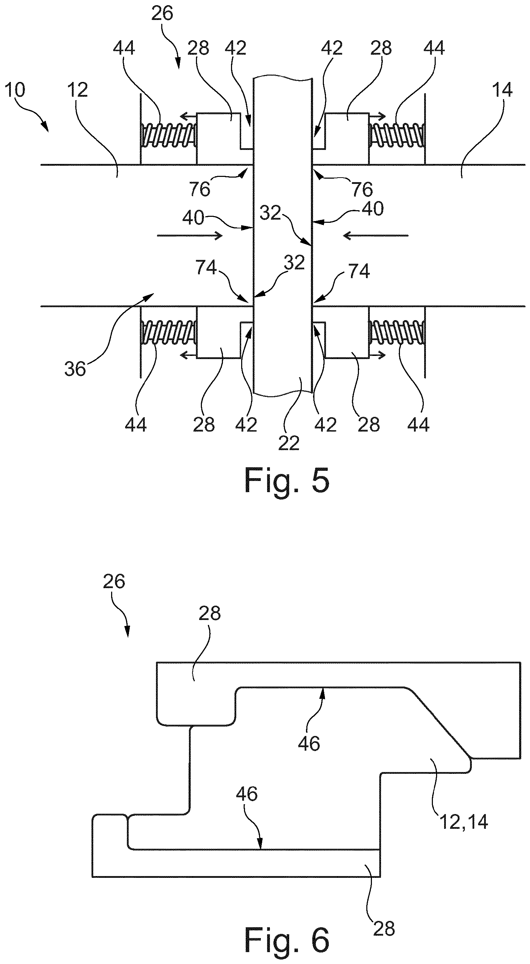

Moreover, the device 10 has a pressure unit 26 that comprises several pressurizing members 28 that are used to apply pressure on the profiles 12, 14 while being heated as will be described later with respect to Figures 5 and 6 and while describing the method for welding both profiles 12, 14.

Furthermore, the device 10 has a stopper 30 being defined by a piston that can be driven up- and downwards indicated by the arrows S. The stopper 30 is positioned in the same plane as the heating plate 22 is driven when being transferred from its passive position into its active position and vice versa. The stopper 30 is generally configured to limit the movement of the profiles 12, 14 while being transferred from their loading position (Figures 1 and 2) into the heating position (Figure 3).

In general, the device 10 is configured to perform a method for welding the at least two profiles 12, 14 wherein the method will be described hereinafter while referring to Figures 1 to 4.

First, both profiles 12, 14 to be welded are engaged in the movable retainers 16, 18 wherein the profiles 12, 14 each have a welding surface 32 that face each other when the profiles 12, 14 are engaged in the retainers 16, 18.

Generally, the profiles 12, 14 have a base portion 34 and a welding portion 36 wherein each welding surface 32 is provided at the face side 38 of the respective profile 12, 14. Thus, each profile 12, 14 has an elongated shape wherein the base portion 34 defines a main direction A, B of the respective profile 12, 14. The welding surfaces 32 are inclined with respect to this main direction A, B of the base portion 34, for instance by an angle of 45°.

After the profiles 12, 14 have been installed on the movable retainers 16, 18, the welding process can be started.

The retainers 16, 18 equipped with the profiles 12, 14 are moved linearly from the loading position into the heating position. In Figure 1, this linear movement may be substantially a movement to the right or left of the plane of projection. This movement is indicated by the arrows R. Alternatively, the retainers 16, 18 are moved along the main directions A, B of the respective profiles 12, 14.

In general, motors 39, for instance linear drives, are allocated to the retainers 16, 18 for enabling the dedicated movement described. These motors 39 are also schematically shown.

The retainers 16, 18 are already located in their loading position while the stopper 30 is in its stopping position wherein the profiles 12, 14 are installed on the retainers 16, 18 such that their face sides 38 contact the stopper 30 as shown in Figure 2.

Then, the stopper 30 is moved into its retracted position such that the stopper 30 does not interact with the profiles 12, 14 anymore. This movement corresponds to a retracting movement.

Afterwards, the heating plate 22 is moved forwards into its active position as shown in Figure 3. This movement may be initiated by the driving unit 24 in an appropriate manner. The linearly movable retainers 16, 18 are slightly moved away from each other in order to ensure enough space for the heating plate 22 to be driven into its active position.

Once the heating plate 22 has reached its active position, heating surfaces 40 defined by the heating plate 22 face the respective welding surfaces 32 of the profiles 12, 14. In the shown embodiments, the single heating plate 22 has two heating surfaces 40.

Then, the retainers 16, 18 are moved (linearly) towards the heating plate 22 such that the welding surfaces 32 of each profile 12, 14 contact the corresponding heat surfaces 40 in order to be heated appropriately.

The heating surfaces 40 may be established by a coating of the heating plate 22, for instance a Polytetrafluoroethylene (PTFE) coating, also known as Teflon coating. Alternatively, a sheet is provided covering the heating plate 22, in particular a Polytetrafluoroethylene (PTFE) sheet.

While being in the heating position, the heating surfaces 40 contact the respective welding surfaces 32 over their entire areas (cross section) ensuring a homogenous melting of the welding surfaces 32.

The heating surfaces 40 and the respective welding surfaces 32 contact each other in a corresponding welding planes W being parallel to the welding surface 32 of the respective profiles 12, 14. Both welding planes W are parallel to each other.

During the welding cycle, the heating plate 22 is driven by the driving unit 24 such that a relative movement is effected between the single heating plate 22 and the welding surfaces 32 of both profiles 12, 14.

The heating plate 22 can be driven by the driving unit 24 such that the heating plate 22 is moved backwards, forwards, upwards, and downwards as indicated by the arrows H (please refer to Figures 1 and 3). Thus, the heating plate 22 is moved in the directions of both welding planes W.

For instance, the heating plate 22 is driven by the driving unit 24 in a step-wise manner wherein the step size is between 10 mm and 40 mm. Particularly, the driving unit 24 controls the movement of the heating plate 22 such that a movement of the heating plate 22 within at least one of the welding planes W is ensured, in particular in both welding planes W being parallel to each other. Thus, the heating plate 22 is moved in two directions, for instance downwards and backwards.

Generally, the heating plate 22 is moved with a constant velocity during each step ensuring a homogenous heating of the welding surfaces 32 contacting the respective heating surfaces 40 established by the heating plate 22. Alternatively, the heating plate 22 is moved with a variable velocity during the welding cycle.

Alternatively or supplementary, the driving unit 24, which is configured to effect the relative movement, is connected to the movable retainers 16, 18 such that the welding surfaces 32 of the profiles 12, 14 installed on the retainers 16, 18 are moved within the welding planes W relative to the heating plate 22 being stationary. This also provides a relative movement of the heating plate 22 and the welding surfaces 32 within the welding planes W during the welding cycle (heating).

Moreover, another driving unit may be provided that is configured to move the movable retainers 16, 18 during the welding cycle.

Furthermore, the pressure unit 26, in particular its pressurizing members 28, apply a pressure on the profiles 12, 14 in their respective welding portion 36. A pressure unit 26 that might be used is shown in Figures 5 and 6 in more detail.

For instance, the pressurizing members 28 apply a pressure at interfaces 42 of the profiles 12, 14 and the heating plate 22, in particular the welding surfaces 32 and the respective heating surfaces 40. As shown in Figures 3 and 5, the pressurizing members 28 contact the heating plate 22 in the heating position of the retainers 16, 18.

The pressure unit 26 comprises force introduction members 44 that urge the pressurizing members 28 against the heating plate 22. Hence, the pressurizing members 28 are pushed against the heating plate 22 during the welding cycle, in particular wherein the pressurizing members 28 are pushed constantly against the heating plate 22. This ensures that no melted material can flow away at the interfaces 42 even though the heating plate 22 moves during the welding cycle. The force introduction members 44 may be established by springs, cylinders or any other suitable means.

Generally, the pressure unit 26 may be provided by any suitable part of the device 10, for instance in so-called contourblocks. Further, the pressure unit 26 may be formed separately.

The pressure applied via the pressurizing members 28 ensures that the material melted is forced or guided substantially to the inside which means to the center of the profiles 12, 14. Thus, no visible welding bead occurs on one of the outer surfaces of the profiles 12, 14 as the pressurizing members 28 are pushed against the heating plate 22 via the force introduction members 44 such that the respective interfaces 42 are closed preventing melted material to flow to any of the outer surfaces. The pressurizing members 28 establish a sealing of the respective interfaces 42.

As shown in Figure 5, the pressurizing members 28 sandwich the profiles 12, 14, in particular their welding portions 36, between themselves.

In Figure 6 showing the pressure unit 26 in another cross section being perpendicular to the one shown in Figure 5, it becomes obvious that the pressurizing members 28 can be formed by shell-like elements. Generally, the shape of the pressurizing members 28 may be adapted to the shape of the profiles 12, 14. Thus, the pressurizing members 28 each have a contacting surface 46 that corresponds to the respective outer surface of the profile 12, 14 that is accommodated by the respective pressurizing member 28.

Accordingly, the shape of the pressurizing members 28, in particular the shape of their contacting surfaces 46, is adapted to the cross section of the profiles 12, 14. This ensures a close contact between the pressurizing members 28 and the profiles 12, 14 as shown in Figure 6. Hence, an effective sealing is provided ensuring that no material melted may flow out at the interfaces 42.

As shown in the embodiments of Figures 5 and 6, the pressure unit 26 comprises four pressurizing members 28 being allocated to two opposite interfaces 42 of each profile 12, 14. These interfaces 42 can be labeled as upper and lower interfaces as they relate to the upper and lower sides of the profiles 12, 14.

However, the pressure unit 26 may comprise more pressurizing members 28 in order to apply a more homogenous pressure on the profiles 12, 14, for instance on the side faces of the respective profiles 12, 14.

In general, the pressurizing members 28 may have a protrusion that is protruding at the face side of the pressurizing members 28 inwardly in an inclined manner. Thus, a small depression in the respective profile 12, 14 is formed at its outer surface merging into the respective welding surface 32. Hence, both profiles 12, 14 establish a small "v" while being connected with each other afterwards. Generally, the depression formed also prevents the occurrence of any welding bead.

The welding cycle lasts about 25 to 40 seconds for a plastic material, for instance. However, the welding cycle time depends on the material of the profiles 12, 14 and the required heat input.

After the welding surfaces 32 of the profiles 12, 14 have been heated sufficiently, the heating plate 22 is moved backwards into its inactive position that is also called a passive position. In this passive position, the heating plate 22 is no longer positioned between the welding surfaces 32 of both profiles 12, 14 such that the melted welding surfaces 32 directly face each other again.

Then, the movable retainers 16, 18 are moved linearly towards each other such that they are brought into contact via their respective welding surfaces 32, in particular pressed against each other, in order to couple the profiles 12, 14 to form a frame portion 48 as shown in Figure 4. In this coupling step, both welding surfaces 32 contact each other in a coupling plane C being substantially parallel to the respective welding surfaces 32. Particularly, the coupling plane C corresponds to the movement plane of the heating plate 22 being defined by the arrows H.

Accordingly, the heating plate 22 is movable in all directions of the plane in which the profiles 12, 14 are coupled afterwards, namely the coupling plane C.

During this coupling step, the pressure unit 26, in particular the pressurizing members 28, still applies a pressure on the profiles 12, 14, in particular the interfaces 42, in order to ensure that no visible welding bead occurs in the coupling area of both profiles 12, 14.

Both profiles 12, 14 are maintained in contact with each other, in particular pressed against each other, during the coupling step for a couple of seconds, for instance 20 to 50 seconds, in order to establish a long-lasting connection of both profiles 12, 14, namely the resulting frame portion 48.

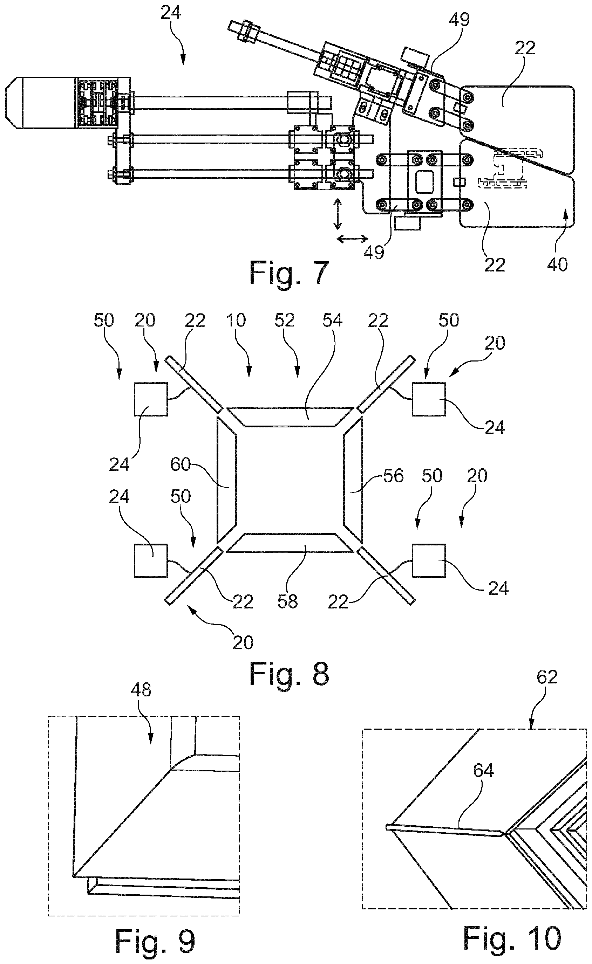

In Figure 7, a device 10 according to a third embodiment is shown.

This embodiment differs from the ones of Figures 1 to 4 in that the heating unit 20 comprises two separate formed heating plates 22 defining together the heating surfaces 40 for the respective profiles 12, 14. Both heating plates 22 are arranged in a common plane. Accordingly, the respective welding planes W are parallel to each other.

Both heating plates 22 can be driven by the driving unit 24 independently. Therefore, the heating plates 22 are coupled to different mechanisms 49 ensuring the relative movement of the heating plates 22. In addition, the heating input of both heating plates 22 can be controlled independently.

In Figure 8, a device 10 according to a fourth embodiment is shown in a top view. The device 10 comprises four heads 50, also called welding units.

In the embodiments shown in Figures 1 to 4, the device 10 has one head 50 as two profiles 12, 14 can be welded together in order to establish a frame portion 48 being right-angled.

Generally, a single head 50 (welding unit) comprises the appropriate retainers 16, 18 for maintaining the respective profiles and one heating unit 20 that is configured to heat the profiles, in particular their welding surfaces.

The device shown in Figure 8 comprises four heads 50 such that a whole frame 52 can be produced within one welding cycle while four different profiles 54, 56, 58, 60 are connected to each other via their respective welding surfaces 32. The "four-head" device 10 comprises four heating units 20 each having a respective heating plate 22 for welding the corresponding profiles 54, 56, 58, 60.

Further embodiments may comprise two or three heads 50. However, more heads 50 are also feasible.

In general, the device 10 may comprise several heads 50 for performing several frame portions 48 simultaneously, in particular the whole frame.

In Figure 9, the frame portion 48 provided by the method described above is shown. In contrast to the frame portion 48 provided by the method according to the invention, a frame portion 62 provided by a method of the prior art has a welding bead 64 being visible as shown in Figure 10.

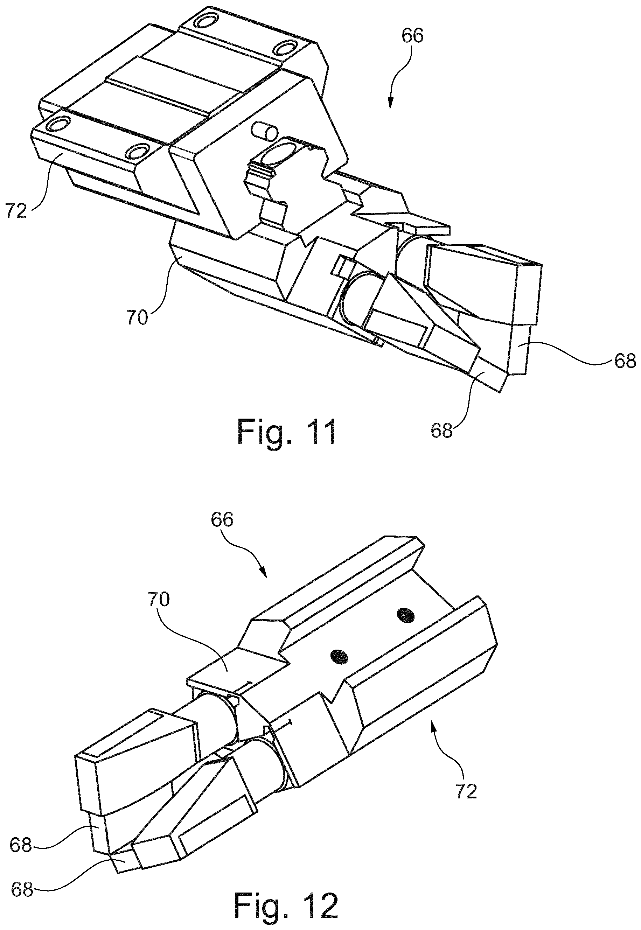

In Figures 11 and 12, a cutting unit 66 is shown in detail that can be used by the device 10, in particular by all embodiments of the devices 10 shown previously.

In the shown embodiment, the cutting unit 66 comprises two knives 68, a base 70 that is connected to the knives 68 as well as a mounting part 72.

In general, the cutting unit 66 is used in a similar manner as the pressure unit 26 since one cutting unit 66 may be assigned to each interface 42. Thus, several cutting units 66 can be provided, However, the cutting units 66 are used to remove melted material in order to avoid the occurrence of a welding bead. For this purpose, the cutting units 66 are driven by the driving unit 24 along the welding surfaces 32 of the respective profiles 12, 14, 54, 56, 58, 60. The driving unit 24 may be coupled to the respective mounting part 72 for moving the dedicated cutting unit 66. However, the cutting units 66 may also be driven by a separate (driving) unit.

In fact, the knives 68 of the cutting units 66 are assigned to the welding surfaces 32 facing each other of the profiles 12, 14, 54, 56, 58, 60 to be connected such that both welding surfaces 32 are processed simultaneously when moving the respective cutting unit 66 along the welding surface(s) 32.

For improving the simultaneous processing, the knives 68 are arranged in an inclined manner with respect to each other as shown in Figures 11 and 12.

According to an embodiment, the cutting unit 66 is moved along the welding surface(s) 32 before the profiles 12, 14, 54, 56, 58, 60 are coupled with each other via their heated welding surfaces 32. Hence, the movement of the cutting unit 66 along the welding surface(s) 32 takes place after the step shown in Figure 3 and prior to the step shown in Figure 4.

This additional processing step ensures that the melted material provided at the face sides 38 of the respective profiles 12, 14, 54, 56, 58, 60 is removed prior to the contacting step.

Alternatively or additionally, the cutting unit 66 is moved along the welding surface(s) 32 after the profiles 12, 14, 54, 56, 58, 60 were coupled with each other via their heated welding surfaces 32. Thus, the (additional) movement of the cutting unit 66 along the welding surface(s) 32 takes place after the step shown in Figure 4.

This processing step ensures that melted material pressed outwardly due to the contacting or rather coupling step is removed by the cutting unit 66.

Generally, the cutting unit 66 may be moved along at least one edge of the welding surface(s) 32 so that melted material is removed at the edge region of the welding surface(s) 32 of the profiles 12, 14, 54, 56, 58, 60 to be connected with each other.

As already mentioned above, two or more cutting units 66 may be assigned to each movable retainer 16, 18. For instance, the cutting units 66 are assigned to opposite sides of the respective retainer 16, 18 such as the upper side and the lower side. However, each movable retainer 16, 18 may also comprise only a single cutting unit 66.

For instance, both cutting units 66 are arranged such that they can remove the melted material at a lower edge 74 and an upper edge 76 of each profile 12, 14 as indicated in Figure 5.

The cutting units 66 are not shown in Figure 5 as they are driven into their retracted positions. In Figure 5, the heating unit 20 or rather the heating plate 22 is driven into its active position for contacting the profiles 12, 14, in particular the welding surfaces 32 as already described.

Once the welding surfaces 32 are sufficiently heated, the heating unit 20 or rather the heating plate 22 is retracted and the cutting units 66 are driven into their active positions interacting with the welding surfaces 32, in particular the lower edge 74 and the upper edge 76.

Generally, the at least one cutting unit 66 may interact with each edge depending on its position.

The cutting units 66 are moved along the welding surfaces 32 in forward and backward directions so that the respective knives 68 remove exceeding melted material from the profiles 12, 14, in particular from their welding surfaces 32.

In general, the at least one cutting unit 66 may be driven in any direction following the respective edge of the profile. Hence, a tilting, turning or any other suitable movement of the respective cutting unit 66 may be provided so that the contour of the respective profile 12, 14 can be followed.

Thus, the at least one cutting unit 66 may cut exceeding material along at least one edge of the respective profile 12, 14, more than one edge and/or along the whole contour of the respective profile 12, 14.

In general, the at least one cutting unit 66 cuts the still warm material before the profiles 12, 14 are coupled wherein the movement of the cutting unit 66 along the (entire) contour or a part thereof may be initiated in different ways.

For instance, the cutting unit 66 is activated pneumatically, controlled by a computational numerical control (CNC) or any combination thereof.

The pressure unit 26 may serve as a reference for the cutting unit 66 so that the cutting unit 66 moves along the pressure unit 26. Alternatively, another reference member of the device 10 may be used as a reference unit along which the cutting unit 66 is moved so that the cutting unit 66 follows this reference member.

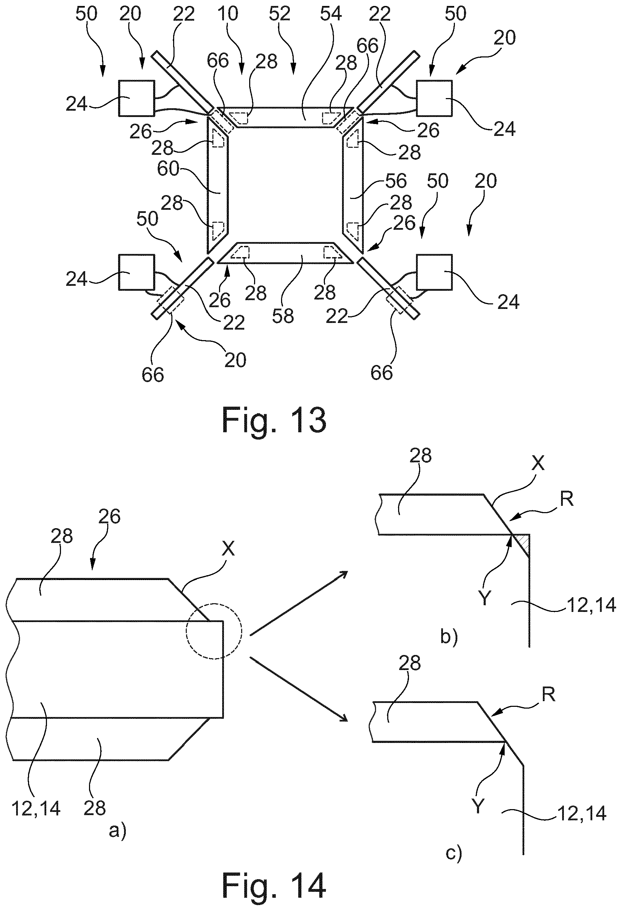

Hence, the pressure unit 26 and/or the other reference member may establish a reference plane for the cutting unit 66 along which the cutting unit 66 is driven so that the cutting process of the exceeding melted material can be done in a defined manner. In fact, a guided cutting operation is ensured as illustrated in Figure 14.

In Figure 14, an overview (on the left side) labelled as Figure 14a, a detail view prior the cutting labelled as Figure 14b and a detail view after the cutting labelled as Figure 14c (both on the right side) are shown.

The pressure unit 26, in particular the respective pressurizing members 28, define(s) the reference plane R the cutting member(s) 66, 68 in the region of the respective interface 42.

The reference plane R may have any desired shape, for instance a linear as shown or a curved shape.

The cutting unit 66 slides along the reference plane (in direction X) until it contact the respective profile 12, 14 at point Y so that a predefined location for the cutting operation is provided. As the material is already heated, the cutting is simplified and chips can be avoided.

Accordingly, the heated material of the respective profile 12, 14 is cut by the cutting unit 66, 68 assigned to the respective edge, in particular wherein a corner may be cut away as shown in Figure 14. However, other shapes than corners may also be cut if necessary.

Afterwards, the profiles 12, 14 are coupled via their heated welding surfaces 32 as shown in Figure 4 wherein it is ensured that no exceeding melted material is provided due to the removing step performed by the cutting units 66. Hence, a welding bead will not occur.

When the profiles 12, 14 are pressed against each other, the same or other cutting units 66 (and/or the pressure units 26) may be driven along the welding surfaces 32 again in order to remove melted material pressed outwardly. This further improves the quality of the welding process such that the occurrence of a welding bead is prevented.

In Figure 13, a device 10 according to another embodiment is schematically shown comprising four heads 50.

Each head 50 comprises two movable retainers 12, 14 (not shown for purposes of simplicity), one heating unit 20, at least one pressure unit 26 and/or at least one cutting unit 66.

In fact, each head 50 may have two or more pressure units 26 and cutting units 66 which are assigned to different sides of the respective profiles 12, 14, 54, 56, 58, 60 to be welded together. For instance, the pressure units 26 and cutting units 66 may be assigned to the upper sides and the lower sides appropriately.

The respective cutting units 66 of the upper left and the upper right heads 50 are positioned by the respective driving units 24 in their active position whereas the cutting units 66 of the lower left and the lower right heads 50 are positioned in their retracted positions.

In the shown embodiment, each head 50 has its own driving unit 24. However, a central driving unit 24 for the whole device 10 is also applicable.

Moreover, each component of the device 10 may have its own driving unit, for instance each cutting unit 66 has its own driving unit.

Generally, a pre-machining of the profiles 12, 14 is not necessary, in particular by incorporating a gap or recess. In addition, a post-processing is not needed, in particular a post-processing along the total contour of the respective profile(s). However, a post-processing may be performed for obtaining a high finishing result. Moreover, different portions or parts of the whole frame can be welded differently such that post-processing may be done in order to obtain a perfect appearance. Generally, this depends on the contour. Hence, an efficient and highly accurate method is provided for establishing a welding of at least two profiles 12, 14 that form a frame portion 48. In addition, a device 10 is provided that ensure to form such a frame portion 48. The melted material that typically form the welding bead is guided to non-visible areas of the frame portion 48, in particular the inner areas of the profiles 12, 14. Therefore, a frame portion 48 is established by welding that does not have a welded appearance on a part of the contour or the whole contour of the respective profile.

Each of the profiles 12, 14 may be made of at least one of a plastic material, in particular polyvinyl chloride, wood, glass fiber and a metal, in particular aluminum. Further, the profiles 12, 14 may be lacquered, painted and/or layered profiles 12, 14.

Due to the several adjustments of the device 10, the profiles 12, 14 may be straight, curved and/or oblique. However, the shape of the profile 12, 14 can be different depending on the desired frame portion 48 and/or frame 52 to be obtained.

## Claims

1. A method for welding at least two profiles (12, 14, 54, 56, 58, 60) to form a frame portion (48), with the following steps:
- Providing two profiles (12, 14, 54, 56, 58, 60) to be welded via welding surfaces (32);
- Heating the welding surfaces (32) of the profiles (12, 14, 54, 56, 58, 60) via a heating unit (20) having at least one heating surface (40) that faces at least one welding surface (32) of the profiles (12, 14, 54, 56, 58, 60);
- Moving a cutting unit (66) along at least one welding surface (32) to remove melted material, wherein the cutting unit (66) is moved along at least one edge (74, 76) of the welding surface (32) to remove melted material at the edge region of the at least one welding surface (32), and wherein the cutting unit (66) is moved along the at least one welding surface (32) before the profiles (12, 14, 54, 56, 58, 60) are coupled via their heated welding surfaces (32); and
- Coupling the profiles (12, 14, 54, 56, 58, 60) via their heated welding surfaces (32) to form the frame portion (48).

2. The method according to claim 1, wherein a relative movement is applied between the at least one heating surface (40) and at least one welding surface (32) in a welding plane (W) being substantially parallel to the at least one welding surface (32) while the at least one heating surface (40) facing the welding surface (32).

3. The method according to any of the preceding claims, wherein the heating unit (20) comprises at least two heating plates (22) defining together one heating surface (40) for the welding surfaces (32).

4. The method according to claim 3, wherein both heating plates (22) are arranged in a common plane, in particular wherein both heating plates (22) are moved independently of each other.

5. The method according to any of the preceding claims, wherein a pressure is applied to at least one interface (42) defined by the heating unit (20) and at least one welding surface (32) via a pressure unit (26).

6. The method according to claim 5, wherein at least one pressurizing member (28) of the pressure unit (26) is pressed against the heating unit (20) during the welding cycle, in particular the heating plate (22), in particular wherein two pressurizing members (28) are pressed against the heating unit (20) during the welding cycle, the two pressurizing members (28) are assigned to one profile (12, 14, 54, 56, 58, 60).

7. The method according to any of the preceding claims, wherein the cutting unit (66) and/or the pressure unit (26) are/is moved along at least one welding surface (32) after the profiles (12, 14, 54, 56, 58, 60) are coupled via their heated welding surfaces (32).

8. A device (10) for welding at least two profiles (12, 14, 54, 56, 58, 60) to form a frame portion (48), comprising:
- at least two movable retainers (16, 18) to engage the profiles (12, 14, 54, 56, 58, 60) to be welded that each have a welding surface (32) facing each other when engaged in the retainers (16, 18);
- at least one heating unit (20) that is configured to heat the welding surfaces (32) of the profiles (12, 14, 54, 56, 58, 60) wherein the heating unit (20) comprises at least one heating plate (22);
- at least one cutting unit (66) that is configured to be moved along at least one edge (74, 76) of the welding surface (32) to remove melted material at the edge region of the at least one welding surface (32) before the profiles (12, 14, 54, 56, 58, 60) are coupled via their heated welding surfaces (32); and
- at least one driving unit (24) connected to the heating unit (20) and/or the movable retainers (16, 18), wherein the driving unit (24) is configured to effect a relative movement between the heating plate (22) and the retainers (16, 18).

9. The device (10) according to claim 8, wherein at least one pressure unit (26) is provided that is configured to apply a pressure to at least one interface (42) defined by the heating unit (10) and at least one welding surface (32).

10. The device (10) according to claim 9, wherein the pressure unit (26) comprises at least one pressurizing member (28) that is forced against the heating plate (22) via a force introduction member (44), in particular several pressurizing members (28).

11. The device (10) according to claim 10, wherein the pressurizing member (28) has a contacting surface (46) that contacts an outer surface of the profile (12, 14, 54, 56, 58, 60) wherein the contacting surface (46) corresponds to the shape of the respective profile (12, 14, 54, 56, 58, 60).

12. The device (10) according to any of the claims 8 to 11, wherein the cutting unit (66) comprises at least one knife (68), in particular two knives (68), assigned to two edges (74, 76) of the welding surfaces (32) of the profiles (12, 14, 54, 56, 58, 60) to be welded, in particular wherein the two knives (68) are inclined with respect to each other.

13. The device (10) according to any of the claims 8 to 12, wherein two cutting units (66) are provided that are assigned to two opposite sides of the movable retainers (16, 18), in particular the upper side and the lower side.

14. The device (10) according to any of the claims 9 to 13, wherein the pressure unit (26) and the cutting unit (66) are separately formed, in particular wherein the at least one driving unit (24) is configured to control the movement of the pressure unit (26) and/or the cutting unit (66) respectively.

15. The device (10) according to any of the claims 8 to 14, wherein the device (10) has at least one head (50) that comprises two movable retainers (16, 18), one heating unit (20) and one cutting unit (66) and optionally one pressure unit (26), in particular wherein the device (10) has several heads (50) each comprising two movable retainers (16, 18), one heating unit (20) and one cutting unit (66) and optionally one pressure unit (26).

## Patentansprüche

1. Verfahren zum Verschweißen wenigstens zweier Profile (12, 14, 54, 56, 58, 60) zur Bildung eines Rahmenteils (48), mit den folgenden Schritten:
- Bereitstellen zweier Profile (12, 14, 54, 56, 58, 60), die über Schweißflächen (32) verschweißt werden sollen,
- Erwärmen der Schweißflächen (32) der Profile (12, 14, 54, 56, 58, 60) über eine Heizeinheit (20), die wenigstens eine Heizfläche (40) aufweist, die wenigstens einer Schweißfläche (32) der Profile (12, 14, 54, 56, 58, 60) zugewandt ist,
- Bewegen einer Schneideinheit (66) entlang wenigstens einer Schweißfläche (32), um geschmolzenes Material zu entfernen, wobei die Schneideinheit (66) entlang wenigstens einer Kante (74, 76) der Schweißfläche (32) bewegt wird, um geschmolzenes Material in dem Kantenbereich der wenigstens einen Schweißfläche (32) zu entfernen, und wobei die Schneideinheit (66) entlang der wenigstens einen Schweißfläche (32) bewegt wird, bevor die Profile (12, 14, 54, 56, 58, 60) über ihre erwärmten Schweißflächen (32) verbunden werden, und
- Verbinden der Profile (12, 14, 54, 56, 58, 60) über ihre erwärmten Schweißflächen (32) zur Bildung des Rahmenteils (48).

2. Verfahren nach Anspruch 1, bei dem zwischen der wenigstens einen Heizfläche (40) und wenigstens einer Schweißfläche (32) eine Relativbewegung in einer Schweißebene (W) ausgeführt wird, die im Wesentlichen parallel zu der wenigstens einen Schweißfläche (32) ist, während die wenigstens eine Heizfläche (40) der Schweißfläche (32) zugewandt ist.

3. Verfahren nach einem der vorhergehenden Ansprüche, bei dem die Heizeinheit (20) wenigstens zwei Heizplatten (22) umfasst, die zusammen eine Heizfläche (40) für die Schweißflächen (32) definieren.

4. Verfahren nach Anspruch 3, bei dem beide Heizplatten (22) in einer gemeinsamen Ebene angeordnet sind, insbesondere bei dem beide Heizplatten (22) unabhängig voneinander bewegt werden.

5. Verfahren nach einem der vorhergehenden Ansprüche, bei dem über eine Druckeinheit (26) ein Druck auf wenigstens eine von der Heizeinheit (20) und wenigstens einer Schweißfläche (32) definierte Grenzfläche (42) aufgebracht wird.

6. Verfahren nach Anspruch 5, bei dem wenigstens ein Druckbeaufschlagungselement (28) der Druckeinheit (26) während des Schweißzyklus gegen die Heizeinheit (20), insbesondere die Heizplatte (22), gedrückt wird, insbesondere wobei zwei Druckbeaufschlagungselemente (28) während des Schweißzyklus gegen die Heizeinheit (20) gedrückt werden, wobei die beiden Druckbeaufschlagungselemente (28) einem Profil (12, 14, 54, 56, 58, 60) zugeordnet sind.

7. Verfahren nach einem der vorhergehenden Ansprüche, bei dem die Schneideinheit (66) und/oder die Druckeinheit (26) entlang wenigstens einer Schweißfläche (32) bewegt werden bzw. wird, nachdem die Profile (12, 14, 54, 56, 58, 60) über ihre erwärmten Schweißflächen (32) verbunden wurden.

8. Vorrichtung (10) zum Verschweißen wenigstens zweier Profile (12, 14, 54, 56, 58, 60) zur Bildung eines Rahmenteils (48), mit:
- wenigstens zwei beweglichen Halterungen (16, 18), die an den zu verschweißenden Profilen (12, 14, 54, 56, 58, 60) angreifen, die jeweils eine Schweißfläche (32) aufweisen, die einander zugewandt sind, wenn sie mit den Halterungen (16, 18) in Eingriff sind,
- wenigstens einer Heizeinheit (20), die so ausgebildet ist, dass sie die Schweißflächen (32) der Profile (12, 14, 54, 56, 58, 60) erwärmt, wobei die Heizeinheit (20) wenigstens eine Heizplatte (22) umfasst,
- wenigstens einer Schneideinheit (66), die so ausgebildet ist, dass sie entlang wenigstens einer Kante (74, 76) der Schweißfläche (32) bewegt wird, um geschmolzenes Material im Kantenbereich der wenigstens einen Schweißfläche (32) zu entfernen, bevor die Profile (12, 14, 54, 56, 58, 60) über ihre erwärmten Schweißflächen (32) verbunden werden, und
- wenigstens einer Antriebseinheit (24), die mit der Heizeinheit (20) und/oder den beweglichen Halterungen (16, 18) verbunden ist, wobei die Antriebseinheit (24) so ausgebildet ist, dass sie eine Relativbewegung zwischen der Heizplatte (22) und den Halterungen (16, 18) bewirkt.

9. Vorrichtung (10) nach Anspruch 8, bei der wenigstens eine Druckeinheit (26) vorgesehen ist, die so ausgebildet ist, dass sie einen Druck auf wenigstens eine von der Heizeinheit (10) und wenigstens einer Schweißfläche (32) definierte Grenzfläche (42) aufbringt.

10. Vorrichtung (10) nach Anspruch 9, bei der die Druckeinheit (26) wenigstens ein Druckbeaufschlagungselement (28) umfasst, das über ein Krafteinleitungselement (44) gegen die Heizplatte (22) gepresst wird, insbesondere mehrere Druckbeaufschlagungselemente (28).

11. Vorrichtung (10) nach Anspruch 10, bei der das Druckbeaufschlagungselement (28) eine Kontaktierungsfläche (46) aufweist, die mit einer Außenfläche des Profils (12, 14, 54, 56, 58, 60) in Kontakt gelangt, wobei die Kontaktierungsfläche (46) der Gestalt des jeweiligen Profils (12, 14, 54, 56, 58, 60) entspricht.

12. Vorrichtung (10) nach einem der Ansprüche 8 bis 11, bei der die Schneideinheit (66) wenigstens eine Schneide (68), insbesondere zwei Schneiden (68), umfasst, die zwei Kanten (74, 76) der Schweißflächen (32) der zu verschweißenden Profile (12, 14, 54, 56, 58, 60) zugeordnet sind, insbesondere wobei die beiden Schneiden (68) relativ zueinander geneigt sind.

13. Vorrichtung (10) nach einem der Ansprüche 8 bis 12, bei der zwei Schneideinheiten (66) vorgesehen sind, die zwei entgegengesetzten Seiten der beweglichen Halterungen (16, 18), insbesondere der Oberseite und der Unterseite, zugeordnet sind.

14. Vorrichtung (10) nach einem der Ansprüche 9 bis 13, bei der die Druckeinheit (26) und die Schneideinheit (66) getrennt gebildet sind, insbesondere wobei die wenigstens eine Antriebseinheit (24) zur Steuerung der Bewegung jeweils der Druckeinheit (26) und/oder der Schneideinheit (66) ausgebildet ist.

15. Vorrichtung (10) nach einem der Ansprüche 8 bis 14, wobei die Vorrichtung (10) wenigstens einen Kopf (50) aufweist, der zwei bewegliche Halterungen (16, 18), eine Heizeinheit (20) und eine Schneideinheit (66) sowie optional eine Druckeinheit (26) umfasst, insbesondere wobei die Vorrichtung (10) mehrere Köpfe (50) aufweist, die jeweils zwei bewegliche Halterungen (16, 18), eine Heizeinheit (20) und eine Schneideinheit (66) sowie optional eine Druckeinheit (26) umfassen.

## Revendications

1. Procédé de soudage d'au moins deux profils (12, 14, 54, 56, 58, 60) pour former une partie de cadre (48), comprenant les étapes suivantes :
- fournir deux profils (12, 14, 54, 56, 58, 60) à souder via des surfaces de soudage (32);
- chauffer les surfaces de soudage (32) des profils (12, 14, 54, 56, 58, 60) par une unité de chauffage (20) qui présente au moins une surface de chauffage (40) tournée vers au moins une surface de soudage (32) des profils (12, 14, 54, 56, 58, 60),
- déplacer une unité de coupe (66) le long d'au moins une surface de soudage (32) pour enlever du matériau fondu, l'unité de coupe (66) étant déplacée le long d'au moins une arête (74, 76) de la surface de soudage (32) pour enlever du matériau fondu dans la zone d'arête de ladite au moins une surface de soudage (32), et l'unité de coupe (66) étant déplacée le long de ladite au moins une surface de soudage (32) avant le raccordement des profils (12, 14, 54, 56, 58, 60) via leurs surfaces de soudage chauffées (32) ; et
- raccorder les profils (12, 14, 54, 56, 58, 60) via leurs surfaces de soudage chauffées (32) pour former la partie de cadre (48).

2. Procédé selon la revendication 1, dans lequel un mouvement relatif est appliqué entre ladite au moins une surface de chauffage (40) et au moins une surface de soudage (32) dans un plan de soudage (W) sensiblement parallèle à ladite au moins une surface de soudage (32), alors que ladite au moins une surface de chauffage (40) est tournée vers la surface de soudage (32).

3. Procédé selon l'une des revendications précédentes, dans lequel l'unité de chauffage (20) comprend au moins deux plaques de chauffage (22) définissant ensemble une surface de chauffage (40) pour les surfaces de soudage (32).

4. Procédé selon la revendication 3, dans lequel les deux plaques de chauffage (22) sont agencées dans un plan commun, en particulier dans lequel les deux plaques de chauffage (22) sont déplacées indépendamment l'une de l'autre.

5. Procédé selon l'une des revendications précédentes, dans lequel une pression est appliquée à au moins une interface (42) définie par l'unité de chauffage (20) et au moins une surface de soudage (32) par une unité de pression (26).

6. Procédé selon la revendication 5, dans lequel au moins un élément de mise en pression (28) de l'unité de pression (26) est poussé contre l'unité de chauffage (20), en particulier la plaque de chauffage (22), pendant le cycle de soudage, en particulier dans lequel deux éléments de mise en pression (28) sont poussés contre l'unité de chauffage (20) pendant le cycle de soudage, les deux éléments de mise en pression (28) étant attribués à un profil (12, 14, 54, 56, 58, 60).

7. Procédé selon l'une des revendications précédentes, dans lequel l'unité de coupe (66) et/ou l'unité de pression (26) sont/est déplacée(s) le long d'au moins une surface de soudage (32) après le raccordement des profils (12, 14, 54, 56, 58, 60) via leurs surfaces de soudage chauffées (32).

8. Dispositif (10) pour le soudage d'au moins deux profils (12, 14, 54, 56, 58, 60) pour former une partie de cadre (48), comprenant :
- au moins deux moyens de retenue déplaçables (16, 18) pour l'engrenage avec les profils (12, 14, 54, 56, 58, 60) à souder qui présentent chacun une surface de soudage (32) tournées les unes vers les autres lorsqu'ils sont en engrènement avec les moyens de retenue (16, 18) ;
- au moins une unité de chauffage (20) qui est réalisée de manière à chauffer les surfaces de soudage (32) des profils (12, 14, 54, 56, 58, 60), l'unité de chauffage (20) comprenant au moins une plaque de chauffage (22) ;
- au moins une unité de coupe (66) qui est réalisée de manière à être déplacée le long d'au moins une arête (74, 76) de la surface de soudage (32) pour enlever du matériau fondu dans la zone d'arête de ladite au moins une surface de soudage (32) avant le raccordement des profils (12, 14, 54, 56, 58, 60) via leurs surfaces de soudage chauffées (32) ; et
- au moins une unité d'entraînement (24) connectée à l'unité de chauffage (20) et/ou aux moyens de retenue déplaçables (16, 18), l'unité d'entraînement (24) étant réalisée de manière à provoquer un mouvement relatif entre la plaque de chauffage (22) et les moyens de retenue (16, 18).

9. Dispositif (10) selon la revendication 8, dans lequel il est prévu au moins une unité de pression (26) qui est réalisée de manière à appliquer une pression sur au moins une interface (42) définie par l'unité de chauffage (10) et au moins une surface de soudage (32).

10. Dispositif (10) selon la revendication 9, dans lequel l'unité de pression (26) comprend au moins un élément de mise en pression (28) forcé contre la plaque de chauffage (22) par un élément d'introduction de force (44), en particulier plusieurs éléments de mise sous pression (28).

11. Dispositif (10) selon la revendication 10, dans lequel l'élément de mise en pression (28) présente une surface de contact (46) qui contacte une surface extérieure du profil (12, 14, 54, 56, 58, 60), la surface de contact (46) correspondant à la forme du profil respectif (12, 14, 54, 56, 58, 60).

12. Dispositif (10) selon l'une des revendications 8 à 11, dans lequel l'unité de coupe (66) comprend au moins un couteau (68), en particulier deux couteaux (68) attribués à deux arêtes (74, 76) des surfaces de soudage (32) des profils (12, 14, 54, 56, 58, 60) à souder, en particulier dans lequel les deux couteaux (68) sont inclinés l'un par rapport à l'autre.

13. Dispositif (10) selon l'une des revendications 8 à 12, dans lequel il est prévu deux unités de coupe (66) qui sont attribuées à deux faces opposées des moyens de retenue déplaçables (16, 18), en particulier à la face supérieure et à la face inférieure.

14. Dispositif (10) selon l'une des revendications 9 à 13, dans lequel l'unité de pression (26) et l'unité de coupe (66) sont réalisées séparément, en particulier dans lequel ladite au moins une unité d'entraînement (24) est réalisée de manière à commander le mouvement de l'unité de pression (26) et/ou de l'unité de coupe (66), respectivement.

15. Dispositif (10) selon l'une des revendications 8 à 14, dans lequel le dispositif (10) présente au moins une tête (50) qui comprend deux moyens de retenue déplaçables (16, 18), une unité de chauffage (20) et une unité de coupe (66), et en option une unité de pression (26), en particulier dans lequel le dispositif (10) présente plusieurs têtes (50) comprenant chacune deux moyens de retenue déplaçables (16, 18), une unité de chauffage (20) et une unité de coupe (66), et en option une unité de pression (26).
